(19) Europäisches Patentamt
European Patent Office
Office européen des brevets

(11) Veröffentlichungsnummer: **0 036 974**
**B1**

(12) # EUROPÄISCHE PATENTSCHRIFT

(45) Veröffentlichungstag der Patentschrift: **21.09.83**

(51) Int. Cl.³: **C 08 F 110/10**, C 08 F 2/06, C 08 F 4/14

(21) Anmeldenummer: **81101736.7**

(22) Anmeldetag: **10.03.81**

(54) **Verfahren zur Polymerisation von Isobutylen.**

(30) Priorität: **21.03.80 DE 3010870**

(43) Veröffentlichungstag der Anmeldung: **07.10.81 Patentblatt 81/40**

(45) Bekanntmachung des Hinweises auf die Patenterteilung: **21.09.83 Patentblatt 83/38**

(84) Benannte Vertragsstaaten: **AT BE DE FR GB NL**

(56) Entgegenhaltungen:
**DE-B-1 071 340**
**DE-C-1 002 129**
**FR-A-1 175 704**

(73) Patentinhaber: **BASF Aktiengesellschaft, Carl-Bosch-Strasse 38, D-6700 Ludwigshafen (DE)**

(72) Erfinder: **Fauth, Karl-Heinz, Haardtblick 7, D-6719 Wattenheim (DE)**
Erfinder: **Mohr, Heinrich, Dr., Carostrasse 41, D-6710 Frankenthal (DE)**
Erfinder: **Immel, Wolfgang, Dr., Carl-Bosch-Strasse 78, D-6700 Ludwigshafen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 036 974 B1

# Verfahren zur Polymerisation von Isobutylen

Die vorliegende Erfindung betrifft ein Verfahren zur Herstellung von Polyisobutylen durch Polymerisation von Isobutylen in einer Polymerisationszone, in der eine Temperatur zwischen 0 und −130°C herrscht, mit 0,01 bis 1,0 Gew.-%, bezogen auf das eingesetzte Isobutylen, Bortrifluoridkatalysator und — gegebenfalls — Molekulargewichtsregler und/oder Polymerisationsbeschleuniger in üblichen Mengen in Gegenwart von 30 bis 90 Gew.-%, bezogen auf das eingesetzte Isobutylen, eines unter Reaktionsbedingungen inerten, niedrigsiedenden Lösungsmittels, wobei das bei der Polymerisation verdampfte Lösungsmittel kontinuierlich abgezogen, verflüssigt und im flüssigen Zustand erneut der Polymerisationszone zugeführt wird.

Bei derartigen Polymerisationsverfahren ist es erforderlich, in Gegenwart von Katalysatoren und ggf. Molekulargewichtsreglern sowie in Gegenwart von Beschleunigern zu arbeiten, wobei letztere ausser einer Erhöhung des Molekulargewichts des entstehenden Polymerisats eine Beschleunigung des Reaktionsablaufs und eine Verringerung der Katalysatormenge bewirken sollen. Es ist ferner von technischem Interesse, die Polymerisation des Isobutylens bei festgelegten niedrigen Temperaturen durchzuführen, wo Vernetzungs- und Nebenreaktionen nicht vorhanden sind und gleichzeitig die Polymerisationswärme des Isobutylens abzuführen.

Es ist bekannt, zur Erfüllung dieser Erfordernisse die Polymerisation des Isobutylens, die zwischen 0 und −130°C verläuft, mit Fridel-Crafts-Verbindungen ggf. in Gegenwart von Molekulargewichtsreglern zu katalysieren und zur Beschleunigung der Reaktion und Erhöhung des Molekulargewichts in Anwesenheit von 10 bis 5000 Gew.-ppm, bezogen auf das Isobutylen, eines Polymerisationsbeschleunigers zu arbeiten und zur Abführung der Reaktionswärme in Gegenwart eines niedrigsiedende inerten Lösungsmittels, das unter Reaktionsbedingungen verdampft, zu polymerisieren (vgl. DE-AS Nr. 1108438, DE-PS Nr. 1071340 und DE-PS Nr. 1099171). Bei den bekannten Verfahren wird das verdampfte Lösungsmittel in einem Kompressor verdichtet und in den Polymerisationsprozess zurückgeführt.

Es hat sich gezeigt, dass das im Kreis geführte Lösungsmittel nach kurzer Zeit eine so hohe Konzentration an Fremdstoffen, welche die Reglerwirkung stören und eine Erhöhung der Polymerisationszeit und des Katalysatorverbrauchs verursachen können, mit sich führt, dass eine aufarbeitende Reinigung unumgänglich wird (vgl. DE-OS Nr. 2936361).

Hierzu kann man das Lösungsmittel waschen (vgl. DE-AS Nr. 1108438), oder über eine Reinigungsmasse, üblicherweise Tonerdegel leiten (vgl. DE-PS Nr. 1071340). Eine aufwendige Destillation bei tiefer Temperatur oder aber unter Druck ist meist ausserdem noch erforderlich (vgl. DE-AS Nr. 1108438).

Die bekannten wirtschaftlichen Verfahren zur Reinigung des Lösungsmittels haben aber den Nachteil, dass die durch Nebenreaktionen entstandenen sauren Stoffe nicht oder nur im beschränkten Ausmass beseitigt werden. So ist z.B. Tonerdegel in bezug auf saure Stoffe nur beschränkt aufnahmefähig, besonders dann, wenn Spuren von Isobutylen aus der Polymerisationszone in den Kreislauf des verdampfenden Lösungsmittels gelangen und auf dem Tonerdegel unter Bildung von Oligomeren des Isobutylens polymerisieren und dessen Oberfläche bedecken. Hochaktive Tonerdegele zerfallen ausserdem unter gleichzeitiger Wirkung von in Nebenreaktionen entstandenem Wasser oder Butanol und das entstehende feine Pulver führt zu lästigen Verstopfungen von Armaturen. Als äusserst störend erweist sich Wasser, das beim Tiefkühlen des verdampften Lösungsmittels in mikrokristalliner Form die Filter passiert und sich undefiniert ablagert und gar die Polymerisation des Isobutylens stört. Schliesslich liefert auch das ggf. verwendete Kompressorenöl noch eine Anzahl störender Substanzen. Die Verunreinigungen haben einen erhöhten Katalysatorverbrauch zur Folge, wobei die Katalysatorreste dann gesondert aus dem Polymerisat entfernt werden müssen. Ausserdem werden durch viele Verunreinigungen Verfärbungen des Polymerisats bewirkt. Eine empfindliche Störung des Polymerisationsablaufes verursachen ausserdem Molekülverbindungen des Katalysators Bortrifluorid mit seinen Verunreinigungen. Der aktivierende Einfluss dieser Molekülverbindungen auf die katalytische Wirkung des verwendeten Katalysators führt zum unruhigen Polymerisationsverlauf (Spritzeffekt). Die Verfahren zur kationischen Polymerisation von Isobuten sind, wie die aufgeführten Nachteile zeigen, also an vielen Stellen verbesserungsbedürftig.

Der Erfindung liegt die Aufgabe zugrunde, ein kontinuierliches Verfahren zur Polymerisation von Isobutylen aufzufinden, ohne dass die oben erwähnten Nachteile auftreten.

Diese Aufgabe wird erfindungsgemäss dadurch gelöst, dass ein Bortrifluoridkatalysator verwendet wird, der höchstons 0,3 Vol.-% an Fremdbestandteilen enthält und das Lösungsmittel mindestens zweimal im Kreis geführt wird.

Bevorzugt soll der Bortrifluoridkatalysator weniger als 0,01 Vol.-% Siliziumtetrafluorid enthalten. Nach besonders bevorzugtem Verfahren wird das Lösungsmittel bis zu 36mal im Kreis geführt und das im Kreis geführte Lösungsmittel ist Äthylen.

Verfahren zur Herstellung von Polyisobutylen durch Polymerisation von Isobutylen in einer Polymerisationszone sind seit geraumer Zeit bekannt und werden in der Monographie von H. Güterbock „Chemische Technologie der Kunststoffe in Einzeldarstellungen, Polyisobutylen", 1959, S. 77 bis 105, Springer-Verlag, Berlin/Göttingen/Heidelberg ausführlich beschrieben. Die erhaltenen Polyisobutylene sind bei Raumtemperatur, je nach Molekulargewicht, viskos-ölig bis gummielastisch, haben eine Dichte von 0,83 bis 0,93 g/cm³ und weisen die Formel:

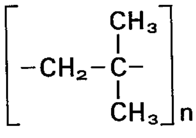

auf, wobei n = 2 bis 80000.

Die Polymerisation des Isobutylens erfolgt nach bekanntem Verfahren bei Reaktionstemperaturen zwischen 0 und −130° C, vorzugsweise arbeitet man bei Temperaturen zwischen −50° C und −110° C. Das Verfahren arbeitet drucklos.

Um bei einer gegebenen Temperatur das Molekulargewicht des Polyisobutylens gezielt einstellen zu können, bedient man sich ggf. der sogenannten Molekulargewichtsregler in üblichen Mengen von 1 bis 5000 Gew.-ppm, bezogen auf das eingesetzte Isobutylen. Derartige Molekulargewichtsregler sind beispielsweise die Verbindungen n-Buten, Diisobutylen, Mercaptane, Sulfide oder Polysulfide. Neben einer Erniedrigung des Molekulargewichts der entstehenden Isobutylenpolymerisate bewirken die Molekulargewichtsregler eine beträchtliche Erhöhung der Reaktionszeit und erfordern häufig auch eine Erhöhung des Katalysatorbedarfs.

Die Polymerisation des Isobutylens wird ggf. in Gegenwart von 10 bis 5000 Gew.-ppm, bezogen auf das eingesetzte Isobutylen, eines Polymerisationsbeschleunigers durchgeführt. Diese Substanzen bewirken eine Beschleunigung des Reaktionsablaufs und eine Verringerung der erforderlichen Katalysatormenge. Als Folge dieser Zusätze entstehen ausserdem hochmolekulare Polyisobutylene, da kettenabbrechende Einflüsse weniger wirksam werden. Es handelt sich hierbei vorzugsweise um primäre oder sekundäre Alkohole mit 1 bis 10 Kohlenstoffatomen, beispielsweise um Methanol, Äthanol, n-Propanol, iso-Propanol, n-Butanol, iso-Butanol, Amylalkohole, Cyclohexanol und Benzylalkohol. In Betracht kommen ausserdem Phenole, Carbonsäuren oder Mineralsäuren.

Die Polymerisation des Isobutylens wird in Gegenwart von 30 bis 90 Gew.-%, bezogen auf das eingesetzte Isobutylen, eines unter Reaktionsbedingungen inerten, niedrigsiedenden Lösungsmittels vorgenommen. Wegen der günstigen Lage ihrer Siedepunkte geeignete Lösungsmittel sind bevorzugt Äthan, Propan und besonders Äthylen, da durch Verdampfen derselben unter Reaktionsbedingungen die Polymerisationswärme des Isobutylens auf einfache Weise abgeführt werden kann. Bei Verwendung der obengenannten Lösungsmittel, die gleichzeitig Kühlmittel sind, z.B. beim Einsatz von Äthylen, wird das Isobutylen bei Siedetemperatur des inerten Lösungsmittels polymerisiert. Im Falle des Äthylens beträgt die Polymerisationstemperatur -104° C.

Nach bekannten Verfahren wird das bei der Polymerisation verdampfte Lösungsmittel kontinuierlich abgezogen, verflüssigt und in flüssigem Zustand erneut der Polymerisationszone zugeführt.

Dem Isobutylen können vor oder während der Polymerisation übliche Additive, wie Stabilisatoren, Regler, Farbstoffe und dergleichen einverleibt werden. Diese können aber auch den Polyisobutylenen nach der Polymerisation zugemischt werden. Die Stabilisatoren werden im allgemeinen in Mengen von 0,01 bis 2,0, vorzugsweise von 0,05 bis 0,25 Gew.%, bezogen auf das Gewicht des Polyisobutylens, verwendet.

Als Stabilisatoren kommen alle für die Stabilisierung von Polyisobutylen üblichen Verbindungen in Betracht. Geeignet sind beispielsweise phenolische Antioxiydantien, wie 2,6-Di-tert.-butyl-p-kresol, Tertiärmylphenolsulfid und Tertiäramylphenoldisulfid. Weiterhin sind Stoffe, die Amin-, Sulfid- oder aromatische Hydroxylgruppen enthalten, z.B. Di-(2-oxy-5-butyl-phenyl)sulfid oder -disulfid, Phenyl-β-naphthylamin, Polyvinyläthylsulfid oder Polyvinylbutylsulfid geeignet.

Als Polymerisationskatalysator wird Bortrifluorid eingesetzt. Dieses wird technisch durch Erhitzen von Borsäureanhydrid, Flussspat, Schwefelsäure und Oleum im gusseisernen Rührkessel hergestellt (vgl. GB-PS Nr. 324016). Weitere Darstellungsverfahren werden in den US-PS Nr. 2148514, US-PS Nr. 2196907, US-PS Nr. 2135460, US-PS Nr. 2163232 und US-PS Nr. 2416133 beschrieben. Allen Verfahren ist gemeinsam, dass sie von siliciumdioxidhaltigen Ausgangsmaterialien ausgehen. Die Darstellung von Borfluorid nach den verschiedenen Verfahren (vgl. A.V. Topciev: „Borfluorid und seine Verbindungen als Katalysatoren in der Chemie", VEB-Verlag Berlin, 1962, S. 3-8) ist begleitet von der Bildung einer ganzen Anzahl von Nebenprodukten wie Wasserdampf, Fluorwasserstoff, Schwefeltrioxid, Schwefeldioxid und Siliciumtetrafluorid, die in ihm als Fremdbestandteile enthalten sind. Verwendet man dieses Bortrifluorid unter üblichen Laboratoriumsbedingungen als Katalysator für die diskontinuierliche Polymerisation von Isobutylen, so treten in der Mehrzahl keine störenden Nebenreaktionen auf. Bei kontinuierlichen, technischen Verfahren, in denen das bei der Polymerisation verdampfte Lösungs-, Verdünnungs- und Kühlmittel kontinuierlich abgezogen, verflüssigt und in flüssigem Zustand erneut der Polymerisationszone zugeführt, d.h. im Kreis geführt wird, beobachtet man dagegen einen negativen Einfluss auf die katalytische Wirksamkeit des Bortrifluorids. Es bilden sich Reglerstoffe, die entweder die Isobutenpolymerisation beschleunigen oder hemmen. Dies bewirkt ein unruhiges Polymerisationsverhalten und führt zum sogenannten Spritzen, ein Siedeverzug aufgrund der kräftigen Reaktionswärme, die durch Innenkühlung mittels des Kühlmittels Äthylen abgeführt werden muss.

Nach erfindungsgemässem Verfahren wird ein Bortrifluorid verwendet, das höchstens 0,3 Vol.-% an Fremdbestandteilen enthält und es wird das Lösungsmittel mindestens zweimal im Kreis geführt. Insbesondere soll das verwendete Bortrifluorid weniger als 0,01 Vol.-% Siliziumtetrafluorid ent-

halten. Das Lösungsmittel, das bevorzugt aus Äthylen besteht, kann nun bis zu 36mal im Kreis geführt werden.

Zur Herstellung des erfindungsgemässen Bortrifluorids existieren in Abhängigkeit von den Verunreinigungen verschiedenen Reinigungsmethoden. Zur Entfernung des gebildeten Siliciumtetrafluorids leitet man das Rohgas durch eine mit Natriumfluorid und geschmolzenem Bortrioxid gefüllte Kolonne [vgl. H. Bowlus, „J. Am. Chem. Soc." *53*, 3835 (1931)] oder man verflüssigt es durch Abkühlung mit flüssiger Luft und fraktioniert im Vakuum. Bortrifluorid und Siliciumtetrafluorid kann man mit Hilfe einer guten Fraktionierkolonne durch eine einzige Destillation trennen [vgl. I.R. Johnson, „J. Am. Chem. Soc." *60*, 115 (1938) und H. Meerwein, „J. pr. Chem." *147*, 226 (1936)]. Zur Beseitigung von Fluorwasserstoff wird das gasförmige Bortrifluorid durch mit Bortrioxid gesättigte konzentrierte Schwefelsäure geleitet (H. Bowlus, „J. Am. Chem. Soc." *53*, 3835 (1931). Zur Entfernung von Schwefeldioxid und Wasserdampf leitet man das Rohgas über Aktivkohle (vgl. DE-PS Nr. 1667582). Gereinigtes Bortrifluorid ist auf dem Markt erhältlich.

Das erfindungsgemässe Verfahren erlaubt es, Polyisobutylen sowohl diskontinuierlich als auch ohne Störungen über lange Zeiträume kontinuierlich herzustellen. Die nach dem erfindungsgemässen Verfahren erhaltenen Polyisobutylene haben eine Grenzviskosität [$\eta$] von 0,9 bis 12 dl/g (bestimmt nach ASTM D 1601 und DIN 51 562), weisen eine enge Molekulargewichtsverteilung mit geringer Standardabweichung auf und zeichnen sich durch minimale Verfärbung und geringen Aschegehalt aus. Es ist ein Vorteil des erfindungsgemässen Verfahrens, dass Polymerisationsstörungen, wie erhöhte Wasser- und Alkoholbildung durch Nebenreaktionen, Umsetzungen mit ggf. eingesetzten Trockenmitteln, wie Calciumchlorid unter Freisetzung von Salzsäure, erhöhte Oligomerenbildung, Verstopfungen von Messleitungen durch Katalysatorreste und niedermolekulare Polyisobutylene und Belegungen von Apparaten und Wärmeaustauschern vermieden werden.

Ein besonderer Vorteil bei Anwendung von sorgfältig gereinigtem Bortrifluorid besteht darin, dass das Kühl-, Lösungs- und Verdünnungsmittel Äthylen mehrmals für die Bortrifluorid initiierten Isobutylenpolymerisation störungsfrei eingesetzt werden kann.

Das neue Verfahren wird in den nachstehenden Beispielen näher erläutert. Die in den Beispielen angegebenen Molekulargewichte wurden nach Staudinger ermittelt.

Um den Stand der Technik zu zeigen, wurde ein technisches Bortrifluorid mit einer Reinheit von 95 Vol.-% verwendet. Die Zusammensetzung des Industriebortrifluorids hat folgendes Aussehen:

Stickstoff: 1,30 Vol.-%
Wasserstoff: 0,02 Vol.-%
Sauerstoff: 0,6 Vol.-%
Argon: 0,02 Vol.-%
Kohlenmonoxid: 0,01 Vol.-%
Siliciumtetrafluorid: 2 Vol.-%
Schwefeldioxid: 1 Vol.-%

Für das erfindungsgemässe Verfahren wurde ein sorgfältig gereinigtes, auf dem Markt erhältliches Bortrifluorid mit einer Reinheit von 99,7 Vol.-% eingesetzt. Eine Durchschnittsanalyse ergab folgende Bestandteile:

Schwefeldioxid: 0,001 Vol.-%
Sulfat: 0,001 Vol.-%
Siliciumtetrafluorid: 0,01 Vol.-%
Luft: 0,25 Vol.-%

*Beispiel 1:*

Es wurden 100 mg technisches Bortrifluorid (Industriebortrifluorid) in 1/10 n NaOH gelöst und der durch Neutralisation bedingte Verbrauch mit 1/10 n HCl gegen Phenolphtalein bestimmt.

100 mg technisches $BF_3$ (Reinheit 95 Vol.-%) neutralisieren 150 mg NaOH.

*Beispiel 2:*

Es wurde, wie im Beispiel 1 beschrieben, gereinigtes Bortrifluorid verwandt.

100 mg gereinigtes $BF_3$ (Reinheit 99,7 Vol.-%) neutralisieren 130 mg NaOH.

*Beispiel 3:* (Vergleich)

A) Polymerisationslösung:

Unter Ausschluss von Feuchtigkeit mischt man bei einer Temperatur von −7° C 12 g reines getrocknetes flüssiges Isobutylen mit 1000 Gew.-ppm Isobutanol und 23 g reines getrocknetes flüssiges Äthylen von −104° C.

B) Katalysatorlösung:

100 g technisches $BF_3$ (Reinheit 95 Vol.-%) werden in 23 g reinem getrocknetem flüssigen Äthylen von −104° C gelöst. Die Katalysatorlösung wird der Polymerisationslösung zuaddiert. Die Polymerisation ist nach 7 s beendet und läuft unruhig unter Spritzneigung ab. Man erhält ein weisses Polyisobutylen mit einem Molekulargewicht von 265 000.

*Beispiel 4:*

Man verfährt wie in Beispiel 3 beschrieben, nur mit dem Unterschied, dass in der Katalysatorlösung 100 mg gereinigtes Bortrifluorid (Reinheit 99,7 Vol.-%) gelöst wurden.

Die Polymerisation ist nach 9 s beendet und läuft ruhig ab. Man erhält ein weisses Polyisobutylen mit einem Molekulargewicht von 280 000.

*Beispiel 5:* (Vergleich)

A) Polymerisationslösung:

Unter Ausschluss von Feuchtigkeit mischt man bei einer Temperatur von −7° C 12 g reines getrocknetes flüssiges Isobuten mit 200 Vol.-ppm Isobutanol, 75 Vol.-ppm Methanol, 385 Vol.-ppm Diisobuten und 23 g reines getrocknetes flüssiges Äthylen von −104° C.

B) Katalysatorlösung:

100 mg technisches $BF_3$ (Reinheit 95 Vol.-%) werden in 23 g reinem, getrocknetem flüssigen Äthylen von −104° C gelöst.

Die Katalysatorlösung wird der Polymerisationslösung zuaddiert. Die Polymerisation ist in 70 s beendet und verläuft unruhig unter Spritzneigung ab. Es entsteht ein weisses Polyisobutylen mit einem Molekulargewicht von 101 000.

*Beispiel 6:*

Man verfährt wie in Beispiel 5 beschrieben, nur mit dem Unterschied, dass in der Katalysatorlösung 100 mg gereinigtes Bortrifluorid (Reinheit 99,7 Vol.-%) gelöst wurden.

Die Polymerisation läuft ruhig innerhalb 30 s ab. Es entsteht ein weisses Polyvisobutylen mit einem Molekulargewicht von 101 000.

*Beispiel 7:* (Vergleich)

A) Polymerisationslösung:

Unter Ausschluss von Feuchtigkeit mischt man bei einer Temperatur von −7° C 12 g reines getrocknetes flüssiges Isobuten mit 1000 Vol.-ppm Isobutanol und 23 g Äthylen, das 30mal als Lösungsmittel bei Anwendung von technischem Bortrifluorid eingesetzt war von −104° C.

B) Katalysatorlösung:

100 mg technisches $BF_3$ (Reinheit 95 Vol.-%) werden in 23 g Äthylen, das 30mal als L$sungsmittel bei Anwendung von technischem Bortrifluorid eingesetzt war, von −104° C gelöst. Die Katalysatorlösung wird der Polymerisationslösung zuaddiert. Die Polymerisation läuft innerhalb 1 s explosionsartig unter starker Spritzneigung ab. Man erhält ein weisses Polyisobutylen mit einem Molekulargewicht von 183 000.

*Beispiel 8:*

Man verfährt wie in Beispiel 7 beschrieben, nur mit dem Unterschied, dass gereinigtes Bortrifluorid (Reinheit 99,7 Vol.-%) für die Polymerisation eingesetzt wurde.

Die Polymerisation läuft 9 s ruhig ohne Spritzneigung ab. Man erhält ein weisses Polyisobutylen mit einem Molekulargewicht von 280 000.

*Beispiel 9:* (Vergleich)

A) Polymerisationslösung:

Unter Ausschluss von Feuchtigkeit mischt man bei einer Temperatur von −7° C 12 g reines getrocknetes flüssiges Isobuten mit 1000 Vol.-ppm Isobutanol und 23 g Äthylen, das 3mal als Lösungsmittel bei Anwendung von technischem Bortrifluorid eingesetzt war, von −104° C.

B) Katalysatorlösung:

100 mg technisches Bortrifluorid (Reinheit 95 Vol.-%) werden in 23g Äthylen, das 3mal als Lösungsmittel bei Anwendung von technischem Bortrifluorid eingesetzt war, von −104° C gelöst.

Die Katalysatorlösung wird der Polymerisationslösung zuaddiert. Die Polymerisation läuft innerhalb 4 s unruhig unter Spritzneigung ab. Man erhält ein weisses Polyisobutylen mit einem Molekulargewicht von 247 000.

*Beispiel 10:*

Man verfährt wie in Beispiel 9 beschrieben, nur mit dem Unterschied, dass gereinigtes Bortrifluorid (Reinheit 99,7 Vol.-%) für die Polymerisationslösung und Katalysatorlösung benutzt wurde.

Die Polymerisation läuft ruhig ohne Spritzneigung innerhalb 9 s ab. Man erhält ein weisses Polyisobutylen mit einem Molekulargewicht von 280 000.

## Patentansprüche

1. Verfahren zur Herstellung von Polyisobutylen durch Polymerisation von Isobutylen in einer Polymerisationszone, in der eine Temperatur zwischen 0 und −130° C herrscht, mit 0,01 bis 1,0 Gewichtsprozent, bezogen auf das eingesetzte Isobutylen, Bortrifluoridkatalysator und — gegebenenfalls — Molekulargewichtsregler und/oder Polymerisationsbeschleuniger in üblichen Mengen in Gegenwart von 30 bis 90 Gew.-%, bezogen auf das eingesetzte Isobutylen, eines unter Reaktionsbedingungen inerten, niedrigsiedenden Lösungsmittels, wobei das bei der Polymerisation verdampfte Lösungsmittel kontinuierlich abgezogen, verflüssigt und im flüssigen Zustand erneut der Polymerisationszone zugeführt wird, dadurch gekennzeichnet, dass ein Bortrifluoridkatalysator verwendet wird, der höchstens 0,3 Volumenprozent an Fremdbestandteilen enthält und das Lösungsmittel mindestens zwei mal im Kreis geführt wird.

2. Verfahren nach Anspruch 1, dadurch gekennzeichnet, dass der Bortrifluoridkatalysator weniger als 0,01 Vol.-% Siliciumtetrafluorid enthält.

3. Verfahren nach Anspruch 1, dadurch gekennzeichnet, dass das Lösungsmittel bis zu 36mal im Kreis geführt wird.

4. Verfahren nach Anspruch 1, dadurch gekennzeichnet, dass das im Kreis geführte Lösungsmittel Äthylen ist.

## Revendications

1. Procédé de préparation de polyisobutylène par polymérisation d'isobutylène dans une zone de polymérisation dans laquelle on fait régner une température entre 0 et −130° C, en présence de 0,01 à 1,0% en poids, par rapport à l'isobutylène mis en œuvre, d'un catalyseur au trifluorure de bore et éventuellement de proportions usuelles d'un régulateur du poids moléculaire et/ou d'un accélérateur de la polymérisation et en présence de 30 à 90% en poids, par rapport à l'isobutylène mis en œuvre, d'un solvant à bas point d'ébullition inerte, le solvant s'évaporant durant la polymérisation étant soutiré en continu, reliquéfié et recyclé à l'état liquide dans la zone de polymérisation, caractérisé en ce que l'on emploie un catalyseur au trifluorure de bore qui renferme au maximum 0,3% en volume d'ingrédients étrangers et que l'on fait effectuer au solvant au moins deux cycles.

2. Procédé suivant la revendication 1, caractérisé en ce que le catalyseur au trifluorure de bore contient moins de 0,01% en volume de tétrafluorure de silicium.

3. Procédé suivant la revendication 1, caractérisé en ce que l'on fait effectuer au solvant jusqu'à 36 cycles.

4. Procédé suivant la revendication 1, caractérisé en ce que le solvant circulant en circuit fermé est l'éthylène.

## Claims

1. A process for the preparation of polyisobutylene by polymerizing isobutylene in a polymerization zone which is at from 0 to −130° C, by means of from 0.01 to 1.0% by weight, based on isobutylene employed, of boron trifluoride catalyst, in the presence or absence of conventional amounts of molecular weight regulators and/or polymerization accelerators, and in the presence of from 30 to 90% by weight, based on isobutylene employed, of a low-boiling solvent which is inert under the reaction conditions, the solvent vaporized during the polymerization being drawn off continuously, liquefied and recycled, in the liquid state, to the polymerization zone, wherein a boron trifluoride catalayst which contains not more than 0.3% by volume of foreign constituents is used and the solvent is recycled not less than twice.

2. A process as claimed in claim 1, wherein the boron trifluoride catalyst contains less than 0.01% by volume of silicon tetrafluoride.

3. A process as claimed in claim 1, wherein the solvent is recycled up to 36 times.

4. A process as claimed in claim 1, wherein the recycled solvent is ethylene.